# EUROPEAN PATENT APPLICATION

(11) **EP 4 610 310 A1**
(43) Date of publication of application: **03.09.2025**
(21) Application number: 23900997.0
(22) Date of filing: 28.11.2023
(51) Int. Cl.: C08L 51/00, C08L 25/12, C08L 25/08, C08L 35/06

(54) **RECYCLED RESIN COMPOSITION**

(30) Priority: 05.12.2022 KR 20220167407
(71) Applicant: LG CHEM, LTD., Seoul 07336 (KR)
(72) Inventor: JUNG, Dae San, Daejeon 34122 (KR); KIM, Seong Lyong, Daejeon 34122 (KR); HAN, Seung Hun, Daejeon 34122 (KR); NAM, Jin Oh, Daejeon 34122 (KR); NAMGUNG, Ho, Daejeon 34122 (KR); KIM, Jin Ho, Daejeon 34122 (KR)
(74) Representative: Plasseraud IP
(86) International application number: PCT/KR2023/019363
(87) International publication number: WO 2024/122978

(57) **Abstract**

The present invention relates to a recycled resin composition including a base resin including a graft resin and a heat-resistant resin, and a recycled graft resin, wherein the heat-resistant resin is at least one copolymer selected from the group consisting of an alkyl-substituted aromatic vinyl-based copolymer and an aromatic vinyl-imide-based copolymer, and the recycled graft resin has a heat deflection temperature of 82 °C to 90 °C and a tensile strength of 41 MPa to 54 MPa, and accordingly, a recycled resin that is environmentally friendly and has no degradation in thermal and mechanical properties may be provided.

## Description

### TECHNICAL FIELD

### Cross-reference to Related Applications

This application claims the benefit of Korean Patent Application No. 10-2022-0167407, filed on December 5, 2022, in the Korean Intellectual Property Office, the disclosure of which is incorporated herein in its entirety by reference.

### Technical Field

The present invention relates to a recycled resin composition that is environmentally friendly and has no degradation in physical properties.

### BACKGROUND ART

The rapid advancement of high-tech materials and devices has brought about the emergence of a variety of new technologies and constant evolvement in various tech instruments. Accordingly, consumption of electrical and electronic devices has risen, driving continual generation of waste electrical and electronic devices. Plastics are lowrisk and inexpensive and thus are widely used in electrical and electronic devices, but take up much volume in the recycling process due to features such as low compressibility and high elasticity, making recycling difficult.

Meanwhile, as interest in the environment is growing worldwide, regulations are being tightened to reduce carbon dioxide emissions. In particular, in recent years, environmental pollution resulting from increased use of plastics has become a serious concern, and thus a growing number of countries are introducing extended producer responsibility (EPR) for plastics as a trend in the global circular economy, regulations at a manufacturing stage, such as mandatory use of recycled resins, are being strengthened, as led by US, and plastic tax and carbon border tax are also increasingly adopted, and accordingly, various ways to recycle waste plastics and introduce bio-materials are being explored.

Accordingly, manufacturers are required to add recycled resins at a certain amount or greater when manufacturing resin molded articles, and green rating is given according to the amount of recycled resins.

However, the recycled resins are ones processed already and thus contain additives such as colorants, lubricants, and release agents, and are subjected to hightemperature processing and thus have changes in properties thereof, inevitably causing a greater degradation in physical properties than typical resins when the amount of recycled resins increases. In particular, the recycled resins do not have sufficient chemical resistance to organic solvents, detergents, or fragrances used in a post-processing process when manufacturing molded articles, causing cracks or breakage, and thus are hard to be commercialized as a product.

Accordingly, there is a need to develop a technology using recycled resins to allow products to be environmentally friendly and to allow products to have a minimized degradation in thermal and mechanical properties when applied in actual industries compared to typical plastic new products applied, thereby enabling practical commercialization.

### [Related Art Document]

### [Patent Document]

(Patent Document 1) Korean Patent Publication No. 10-2016-0144185

### DISCLOSURE OF THE INVENTION

### TECHNICAL PROBLEM

An aspect of the present invention provides a recycled resin composition exhibiting eco-friendliness through the use of recycled resins recycled from waste resins, minimizing degradation in thermal properties such as heat resistance and mechanical properties such as tensile strength and impact strength, and providing excellent paintability, thereby replacing virgin resins.

### TECHNICAL SOLUTION

According to an aspect of the present invention, provided is a recycled resin composition including a base resin including a graft resin and a heat-resistant resin, and a recycled graft resin, wherein the heat-resistant resin is at least one copolymer selected from the group consisting of an alkyl-substituted aromatic vinyl-based copolymer and an aromatic vinyl-imide-based copolymer, and the recycled graft resin has a heat deflection temperature of 82 °C to 90 °C and a tensile strength of 41 MPa to 54 MPa.

In addition, according to another aspect of the present invention, provided is a molded article including the recycled resin composition described above.

### ADVANTAGEOUS EFFECTS

A recycled resin composition according to the present invention may ensure eco-friendliness with the use of recycled resins recycled from waste resins, and provide excellent paintability while minimizing degradation in thermal and mechanical properties despite a relatively small input of virgin resin due to the use of recycled resins, and thus may sufficiently replace the virgin resin.

### MODE FOR CARRYING OUT THE INVENTION

Hereinafter, the present invention will be described in detail to aid in understanding of the present invention.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

The terms and measurement methods used in the present invention may be defined as follows unless otherwise separately defined.

The term 'composition' as used herein includes reaction products and decomposition products formed from materials of the composition as well as a mixture of materials including the composition.

The term 'monomer unit' or 'monomer-derived unit' used herein may refer to a repeating unit formed through the participation of a compound used as a monomer in a polymerization reaction, a structure derived therefrom, or the material itself.

The term 'derivative' as used herein may refer to a compound having a structure in which at least one hydrogen atom constituting an original compound is substituted with a halogen group, an alkyl group, or a hydroxy group.

The 'polymerization conversion ratio' herein refers to a degree in which monomers are polymerized through a polymerization reaction to form a polymer, and may be calculated by Equation 4 below by taking some polymers in a reactor during the polymerization and calculating weight of the polymers excluding moisture using Equation 3 below, and then dissolving the sample in a tetrahydrofuran (THF) solvent and precipitating the resulting produce with methanol (MeOH) to remove unreacted monomers, and then measuring weight of the polymers obtained by drying the precipitated floating matter. (Weight of actual polymer) = (Collected polymer) - (Collected polymer X Moisture content) Polymerization conversion rate (%) = [(Weight of polymer obtained by drying) / (Weight of actual polymer) ] X 100

### Recycled resin composition

A recycled resin composition according to the present invention includes a base resin including a graft resin and a heat-resistant resin, and a recycled graft resin, wherein the heat-resistant resin is at least one copolymer selected from the group consisting of an alkyl-substituted aromatic vinyl-based copolymer and an aromatic vinyl-imide-based copolymer, and the recycled graft resin has a heat deflection temperature of 82 °C to 90 °C and a tensile strength of 41 MPa to 54 MPa.

In general, when molded articles are manufactured by mixing two or more types of resins, at least any one of the mixed resins serve as a matrix (continuous phase), and the others serve as a filler (dispersed phase). However, in a case where a recycled graft resin that serve as a filler is applied as in the present invention, when replacing the same virgin graft resin, the recycled graft resin may fail to satisfy the basic level of physical properties required, and may not compensate for reduced physical properties through technologies such as addition of other resins or additives, and accordingly, when applying the recycled graft resin, a method of replacing a resin that serves as a matrix is used. However, the resin that serves as a matrix also has the same issue as described above, and accordingly, when the recycled graft resin is intended to be used, a method for minimizing degradation in processability or final physical properties is needed, and the present invention intends to provide ways of addressing the task.

According to an embodiment of the present invention, the recycled resin composition is eco-friendly and may respond to plastic-related environmental issues with the use of recycled graft resins recycled from waste resins, has no degradation in thermal and mechanical properties that may be caused by a reduced input of virgin resins due to the use of recycled resins, and has excellent paintability and may thus sufficiently replace a virgin resin in the same field.

In addition, in order to ensure no degradation of both thermal and mechanical properties and paintability as well, a graft resin and a heat-resistant resin are included as a base resin along with the recycled graft resin, and the above-described benefits may be achieved more effectively from this combination.

### Recycled graft resin

According to an embodiment of the present invention, the recycled resin composition includes a recycled graft resin. The recycled graft resin is selected to have a heat deflection temperature of 82 °C to 90 °C and a tensile strength of 41 MPa to 54 MPa in terms of physical properties. The recycled graft resin is a graft resin that may be formed through a separate process for recycling after discarding plastic products to which an acrylonitrile-butadiene-styrene-based copolymer (hereinafter referred to as 'ABS resin') is applied.

Accordingly, the recycled graft resin may include a conjugated diene-based polymer, an aromatic vinyl-based monomer unit, and a vinyl cyanide-based monomer unit. The description of the monomer units is the same as that of the graft resin, and thus will be described later in the description of the graft resin below.

According to an embodiment of the present invention, the recycled graft resin needs to satisfy specific physical properties, and one of the properties is heat deflection temperature, which is a thermal property, and this may be 82 °C to 90 °C, preferably 83 °C to 88 °C, more preferably 84 °C to 87 °C, most preferably 84 °C to 86 °C. When the recycled graft resin having a heat deflection temperature of lower than 82 °C is used, the heat resistance of a molded article may not be secured and mechanical properties thereof may be reduced, and when the recycled graft resin is used at a temperature of higher than 90 °C, the paintability of a molded article may be uneven or erosion may take place.

In addition, according to an embodiment of the present invention, the physical property required to be satisfied by the recycled graft resin is tensile strength, and the tensile strength needs to be in the range of 41 MPa to 54 MPa, and may preferably be 43 MPa to 50 MPa, more preferably 44 MPa to 48 MPa, most preferably 45 MPa to 47 MPa. The recycled graft resin in the present invention preferably satisfies the above range, and when having a tensile strength of greater than 54 MPa, the recycled graft resin may not be well dispersed in a matrix resin, and have non-uniform paintability or cause erosion. In addition, when using a recycled graft resin having a tensile strength of lower than 41 MPa, a molded article itself may also have a poor tensile strength, and accordingly, using a recycled graft resin having a tensile strength in the above range is desired.

Meanwhile, in terms of the tensile strength of ABS resins, even in the case of a recycled ABS resin made from a recycled virgin ABS resin, tensile strength of the recycled resin tends not to significantly decrease compared to the virgin ABS resin. Therefore, applying a recycled graft resin having an appropriate level of tensile strength is desirable, and there is a general perception that the higher the tensile strength, the better, but in the present invention, the tensile strength of the recycled graft resin may be more appropriate for implementing the effect of the present invention when satisfying the above range rather than just being high.

In addition, according to an embodiment of the present invention, applying the recycled graft resin in which an Izod impact strength of 8 kgf·cm/cm to 25 kgf·cm/cm is further satisfied may be desirable. The Izod impact strength may be more preferably 9 kgf·cm/cm to 20 kgf·cm/cm, more preferably 9 kgf·cm/cm to 18 kgf·cm/cm. The impact strength is also more appropriate for implementing the effect of the present invention when having an appropriate value rather than just being high, like in the case of tensile strength.

According to an embodiment of the present invention, the base resin may be included in an amount of 50 to 90 parts by weight; and the recycled graft resin may be included in an amount of 10 to 50 parts by weight, with respect to 100 parts by weight of the recycled resin composition. In addition, preferably, the base resin may be included in an amount of 60 to 85 parts by weight; and the recycled graft resin may be included in an amount of 15 to 40 parts by weight. When the recycled graft resin is added in an amount of greater than 10 parts by weight, it may be the minimum requirement to meet the purpose of environmental friendliness and to achieve a uniform and erosion-free painted surface of a molded article, and when the recycled graft resin is added in an amount of less than 50 parts by weight, it may be to ensure the uniformity of excellent physical properties and to obtain a minimum amount of virgin resin that needs to be added to secure the minimum physical properties for commercialization.

### Base resin 1: Graft resin

According to an embodiment of the present invention, the recycled resin composition includes a base resin, and the base resin includes a graft resin. The graft resin may be included in an amount of 5 to 50 parts by weight, 10 to 40 parts by weight, and 15 to 35 parts by weight, with respect to 100 parts by weight of the recycled resin composition, and in this range, excellent impact strength and tensile strength may be achieved, and paintability may also be improved.

The graft resin may include a conjugated diene-based polymer, an aromatic vinyl-based monomer unit, and a vinyl cyanide-based monomer unit. As described above, the graft resin may be an acrylonitrile-butadiene-styrene-based copolymer, and the acrylonitrile-butadiene-styrene copolymer serves to provide excellent moldability and impact resistance to the recycled resin composition and may be a graft copolymer having a core-shell structure including a core containing a conjugated diene monomer unit; and a shell surrounding the core and containing an aromatic vinyl-based monomer unit and a vinyl cyanide-based monomer unit.

According to an embodiment of the present invention, the acrylonitrile-butadiene-styrene-based copolymer may be prepared through emulsion polymerization and emulsion graft polymerization, and for example, may be prepared by emulsion polymerizing a conjugated diene-based monomer to prepare a rubbery polymer core (or seed), adding a vinyl cyanide-based monomer and an aromatic vinyl-based monomer to the core, and performing emulsion graft polymerization.

In addition, the acrylonitrile-butadiene-styrene-based copolymer may include a core containing units derived from a conjugated diene-based monomer in an amount of 30 wt% to 70 wt%; and a shell surrounding the core and containing units derived from an aromatic vinyl-based monomer and units derived from a vinyl cyanide-based monomer in an amount of 30 wt% to 70 wt%, and in this case, the shell may include units derived from an aromatic vinyl-based monomer and units derived from a vinyl cyanide-based monomers in a weight ratio of 7:3 to 8:2, and in this case, the copolymer may have further improved impact resistance, mechanical properties, and moldability.

According to an embodiment of the present invention, a conjugated diene-based monomer of the acrylonitrile-butadiene-styrene-based copolymer may be one or more selected from the group consisting of 1,3-butadiene, 2,3-dimethyl-1,3-butadiene, 2-ethyl-1,3-butadiene, 1,3-pentadiene, and isoprene, and may specifically be 1,3-butadiene.

According to an embodiment of the present invention, the aromatic vinyl-based monomer may be one or more selected from the group consisting of styrene, α-methylstyrene, α-ethylstyrene, p-methylstyrene, o-methylstyrene, o-t-butylstyrene, bromostyrene, chlorostyrene, trichlorostyrene, and a derivative thereof, and may specifically be styrene.

The aromatic vinyl-based monomer may be added in an amount of 30 to 95 parts by weight, 40 to 90 parts by weight, 50 to 85 parts by weight, or 60 to 80 parts by weight, with respect to 100 parts by weight of the aromatic vinyl-based monomer and the vinyl cyanide-based monomer constituting the shell, and in this range, there are effects of obtaining a copolymer to a high polymerization conversion rate, and achieving excellent compatibility with a thermoplastic resin while maintaining the mechanical properties of the copolymer.

According to an embodiment of the present invention, the vinyl cyanide-based monomer may be one or more selected from the group consisting of acrylonitrile, methacrylonitrile, ethacrylonitrile, and a derivative thereof, and may specifically be acrylonitrile.

In addition, according to an embodiment of the present invention, the vinyl cyanide-based monomer may be added in an amount of 5 to 70 parts by weight, 10 to 60 parts by weight, 15 to 50 parts by weight, or 20 to 40 parts by weight, with respect to 100 parts by weight of the aromatic vinyl-based monomer and the vinyl cyanide-based monomer constituting the shell, and in this range, there are effects of obtaining a copolymer to a high polymerization conversion rate, and achieving excellent compatibility with a thermoplastic resin while maintaining the mechanical properties of the copolymer.

According to an embodiment of the present invention, a conjugated diene-based monomer of an unsaturated ester-based graft copolymer may be one or more selected from the group consisting of 1,3-butadiene, 2,3-dimethyl-1,3-butadiene, 2-ethyl-1,3-butadiene, 1,3-pentadiene, and isoprene, and may specifically be 1,3-butadiene.

Meanwhile, the graft resin according to an embodiment of the present invention may be copolymerized by further adding an unsaturated ester-based monomer to the shell. The unsaturated ester-based monomer may be an alkyl (meth)acrylate monomer, and the alkyl (meth)acrylate monomer may be one or more selected from the group consisting of methyl (meth)acrylate, ethyl (meth)acrylate, propyl (meth)acrylate, butyl (meth)acrylate, 2-ethylhexyl (meth)acrylate, decyl (meth)acrylate, and lauryl (meth)acrylate, and specifically, the alkyl (meth)acrylate monomer may be one or more selected from the group consisting of methyl methacrylate, ethyl methacrylate, butyl methacrylate, methyl acrylate, ethyl acrylate, and butyl acrylate.

When the unsaturated ester-based monomer is further included as a constituent monomer of the shell for emulsion graft polymerization, the amount may be appropriately adjusted, and the unsaturated ester-based monomer may be included as a main component or as a secondary component, and this may be appropriately selected depending on the desired physical properties.

The graft resin may be a commercially available resin in general and may be obtained through a commercially available method, and is not particularly limited thereto. In addition, the recycled graft resin may have the same components as the virgin graft resin, but may be prepared through a predetermined recycling process after the virgin graft resin is discarded.

### Base resin 2: Heat-resistant resin

According to an embodiment of the present invention, the recycled resin composition includes a base resin, and the base resin includes a heat-resistant resin. The heat-resistant resin may be included in an amount of 10 to 70 parts by weight, 20 to 60 parts by weight, and 25 to 55 parts by weight, with respect to 100 parts by weight of the recycled resin composition, and in this range, heat resistance may be obtained with a minimized degradation in impact strength and tensile strength, and paintability may also be improved. The heat-resistant resin is applied by using one type of copolymer selected from the group consisting of an alkyl-substituted aromatic vinyl-based copolymer and an aromatic vinyl-imide-based copolymer, or by including both types of copolymers.

The two types of copolymers used as the heat-resistant resin are capable of securing heat resistance in the recycled resin composition and are added as essential components. In particular, the alkyl-substituted aromatic vinyl-based copolymer is capable of balancing thermal properties and mechanical properties of heat resistance, tensile strength, and impact strength, and the aromatic vinyl-imide-based copolymer may be particularly desirable in obtaining thermal properties. In the case where both types of copolymers that may be applied as the heat-resistant resin are included, the input ratio may be 90:10 to 10:90, and may be 90:10 to 30:70, 90:10 to 40:60, or 90:10 to 50:50, as a weight ratio of the alkyl-substituted aromatic vinyl-based copolymer and the aromatic vinyl-imide-based copolymer.

### 1) Alkyl-substituted aromatic vinyl copolymer

According to an embodiment of the present invention, the alkyl-substituted aromatic vinyl-based copolymer may include an alkyl-substituted aromatic vinyl-based monomer unit, an aromatic vinyl-based monomer unit, and a vinyl cyanide-based monomer unit.

According to an embodiment of the present invention, the alkyl-substituted aromatic vinyl-based monomer may be at least one selected from the group consisting of α-methylstyrene, α-ethylstyrene, p-methylstyrene, o-methylstyrene, o-t-butylstyrene, bromostyrene, chlorostyrene, trichlorostyrene, and a derivative thereof, and may specifically be α-methylstyrene.

The alkyl-substituted aromatic vinyl-based monomer may be added in an amount of 30 to 95 parts by weight, 40 to 90 parts by weight, 50 to 85 parts by weight, or 60 to 80 parts by weight, with respect to 100 parts by weight of the total monomer input, and in this range, there are effects of obtaining a copolymer to a high polymerization conversion rate, and maintaining the mechanical properties of the copolymer and obtaining thermal properties to be excellent at maintaining balance between physical properties.

According to an embodiment of the present invention, the aromatic vinyl-based monomer and the vinyl cyanide-based monomer are the same as those described in the graft resin, and thus the description thereof will not be given again.

The aromatic vinyl-based monomer may be added in an amount of 1 part by weight to 20 parts by weight, 2 to 15 parts by weight, or 5 to 15 parts by weight, with respect to 100 parts by weight of the total monomer input, and it may be different from the alkyl-substituted aromatic vinyl-based monomer, and the input amount may be relatively small as a similar monomer.

In addition, according to an embodiment of the present invention, the vinyl cyanide-based monomer may be added in an amount of 5 to 70 parts by weight, 10 to 60 parts by weight, 15 to 50 parts by weight, or 20 to 40 parts by weight, with respect to 100 parts by weight of the total monomer input, and in this range, there are effects of obtaining a copolymer to a high polymerization conversion rate, and maintaining the mechanical properties of the copolymer with excellent thermal properties to maintain the balance between physical properties.

For example, the copolymer may have a weight average molecular weight of 40,000 g/mol to 200,000 g/mol, preferably 50,000 g/mol to 150,000 g/mol, more preferably 70,000 g/mol to 130,000 g/mol, and in this range, has excellent chemical resistance and excellent processability and physical property balance. The copolymer may be prepared by emulsion polymerization, suspension polymerization, bulk polymerization, continuous bulk polymerization, or the like, preferably continuous bulk polymerization.

The alkyl-substituted aromatic vinyl-based copolymer may be one that is commercially available in general and may be obtained through a commercially available method, and is not particularly limited thereto.

### 2) Aromatic vinyl-imide-based copolymer

According to an embodiment of the present invention, the aromatic vinyl-imide-based copolymer may include an aromatic vinyl-based monomer unit, an imide-based monomer unit, and an unsaturated acid anhydride-based monomer unit.

The aromatic vinyl-based monomer is the same as described above, thus the description thereof will not be given again.

According to an embodiment of the present invention, the imide-based monomer may be a maleimide-based monomer, and may be, as a specific example, a maleimide-based monomer in which hydrogen bonded to an N atom of maleimide is substituted with a substituent. As a more specific example, the imide-based monomer may be one or more selected from the group consisting of N-methyl maleimide, N-ethyl maleimide, N-propyl maleimide, N-isopropyl maleimide, N-butyl maleimide, N-isobutyl maleimide, N-t-butyl maleimide, N-cyclohexyl maleimide, N-chlorophenyl maleimide, N-methylphenyl maleimide, N-bromophenyl maleimide, N-lauryl maleimide, N-hydroxyphenyl maleimide, N-methoxyphenyl maleimide, N-carboxyphenyl maleimide, N-nitrophenyl maleimide, N-phenyl maleimide, 2-methyl-N-phenyl maleimide, N-benzyl maleimide, N-naphthyl maleimide, and a derivative thereof, and may be, as a specific example, N-phenyl maleimide.

According to an embodiment of the present invention, the imide-based monomer may be added in an amount of 30 to 95 parts by weight, 40 to 90 parts by weight, 50 to 85 parts by weight, or 60 to 80 parts by weight, with respect to the total amount of monomers introduced, and in this range, there are effects of obtaining a copolymer to a high polymerization conversion rate, preparing a copolymer having a uniform composition of monomer units, and obtaining the prepared copolymer having excellent heat resistance.

According to an embodiment of the present invention, the unsaturated acid anhydride-based monomer may be, for example, one or more selected from the group consisting of maleic anhydride, itaconic anhydride, citraconic anhydride, and aconitic anhydride, and may specifically be maleic anhydride.

According to an embodiment of the present invention, the unsaturated acid anhydride-based monomer may be added in an amount of 1 part by weight to 50 parts by weight, 5 to 40 parts by weight, or 5 to 30 parts by weight, and in this range, there are effects of obtaining a copolymer to a high polymerization conversion rate, preparing a copolymer having a uniform composition of monomer units, and obtaining the prepared copolymer having excellent heat resistance.

As a method for preparing an aromatic vinyl-imide-based copolymer, known methods may be applied. For example, there is a method of copolymerizing a monomer mixture including an aromatic vinyl-based monomer, an imide-based monomer, an unsaturated acid anhydride-based monomer, and other copolymerizable monomers. In addition, there is a method in which after copolymerizing a monomer mixture including an aromatic vinyl-based monomer, an unsaturated acid anhydride-based monomer, and other copolymerizable monomers, a portion of unsaturated acid anhydride-based monomer units is subjected to a reaction with ammonia or primary amine to be imidized and then converted into an imide-based monomer unit (hereinafter referred to as "post imidization method").

The polymerization mode of the aromatic vinyl-imide-based copolymer is, for example, solution polymerization or bulk polymerization. The solution polymerization is preferable, given that an aromatic vinyl-imide-based copolymer having a more uniform copolymerization composition is obtained through polymerization with separate addition. A solvent for the solution polymerization is preferably non-polymerizable, given that by-products are hardly generated and adverse effects are less likely to occur. The polymerization process of any one of continuous polymerization process, batch process (batch), and semi-batch process may be applied. The polymerization method is not particularly limited, but radical polymerization is preferable as a way of manufacturing through a simple process with high productivity.

The solution polymerization or bulk polymerization may preferably have a polymerization temperature of 80 to 150 °C, and be performed using a polymerization initiator and a chain transfer agent, and an azo compound or organic peroxide having a 10-hour half-life temperature of 70 to 120 °C is favorable as the polymerization initiator in terms of controlling the reaction rate of polymerization and the polymerization rate.

Introduction of imide-based monomer units of the aromatic vinyl-imide-based copolymer includes a method of copolymerizing imide-based monomers and a method of postimidization. The method of postimidization is favorable since an amount of residual imide-based monomer in the aromatic vinyl-imide-based copolymer is reduced. The postimidization method is a method in which after copolymerizing a monomer mixture including an aromatic vinyl-based monomer, an unsaturated acid anhydride-based monomer, and other copolymerizable monomers, a portion of the unsaturated acid anhydride-based monomer units is subjected to a reaction with ammonia or primary amine to be imidized and then converted into an imide-based monomer unit. In the postimidization, in the reaction of the primary amine and the unsaturated dicarboxylic anhydride monomer unit, a catalyst may be used to improve a dehydration cyclization reaction. The catalyst is, for example, tertiary amine such as trimethylamine, triethylamine, tripropylamine, tributylamine, N,N-dimethylaniline, or N, N-diethylaniline. The postimidization temperature is preferably 100 to 250 °C, more preferably 120 to 200 °C.

A known method may be adopted as a method (devolatilization method) for removing volatile components such as solvents used for solution polymerization and unreacted monomers from the solution after solution polymerization of the aromatic vinyl-imide-based copolymer or the solution after postimidization. For example, a vacuum devolatilizing tank equipped with a heater or a devolatilizing extruder equipped with a vent may be used. The devolatilized molten aromatic vinyl-imide-based copolymer may be transferred to a granulation process, extruded from a porous die in a strand form, and processed into a pellet shape by a cold cut method, an air hot cut method, or an underwater hot cut method.

The aromatic vinyl-imide-based copolymer may be any one that is commercially available in general, prepared through any of the above methods, and may preferably be those prepared through postimidization, and the aromatic vinyl-imide-based copolymer may be directly prepared through a commercially available method, and is not particularly limited thereto.

### 3) Aromatic vinyl-vinyl cyanide-based resin

According to an embodiment of the present invention, the recycled resin composition may further include an aromatic vinyl-vinyl cyanide-based resin. In this case, the aromatic vinyl-vinyl cyanide-based resin may be added instead of the copolymers added as the heat-resistant resin, and thus the input amount of heat-resistant resin may be relatively small, and accordingly, the input amount of aromatic vinyl-vinyl cyanide-based resin and the input amount of heat-resistant resin may be appropriately regulated according to the desired level of physical properties. The aromatic vinyl-vinyl cyanide-based resin is an aromatic vinyl-vinyl cyanide-based copolymer and includes an aromatic vinyl-based monomer unit and a vinyl cyanide-based monomer unit, and the types of these monomers may be equally selected from the types listed through the descriptions of the above copolymers.

The copolymer may serve as a matrix in the recycled resin composition, and this copolymer has excellent heat resistance and impact resistance, and also has excellent fluidity, and may thus serve as a basis for achieving excellent physical properties of resin molded articles.

For example, the copolymer may have a weight average molecular weight of 70,000 g/mol to 200,000 g/mol, preferably 80,000 g/mol to 180,000 g/mol, more preferably 90,000 g/mol to 160,000 g/mol, and in this range, has excellent chemical resistance and excellent processability and physical property balance. The copolymer may be prepared by emulsion polymerization, suspension polymerization, bulk polymerization, continuous bulk polymerization, or the like, preferably continuous bulk polymerization.

The copolymer may be one that is commercially available in general and may be obtained through a commercially available method, and is not particularly limited thereto.

Meanwhile, as another example according to an embodiment of the present invention, in the recycled resin composition, the heat-resistant resin may be at least one copolymer, preferably at least two copolymers selected from the group consisting of an alkyl-substituted aromatic vinyl-based copolymer, an aromatic vinyl-imide-based copolymer, and an aromatic vinyl-vinyl cyanide-based copolymer. Strictly speaking, the aromatic vinyl-vinyl cyanide-based copolymer is not a resin for obtaining heat resistance, but is a resin that may affect the final physical property tendency of the recycled resin composition and is the basis for obtaining heat resistance and controlling physical property balance, and is included in the category of "heat-resistant resin" and may be appropriately selected and applied along with the other two copolymers.

### Others

The recycled resin composition according to an embodiment of the present invention, if required, may further include one or more additives selected from the group consisting of an impact reinforcing agent, a lubricant, a thermal stabilizer, a dripping preventing agent, an antioxidant, a light stabilizer, an ultraviolet blocking agent, a pigment, and an inorganic filler, and in this case, the additive may be used in an amount of 5.0 parts by weight or less, or 0.1 to 1.0 parts by weight, with respect to 100 parts by weight of the total amount of resins and copolymers included in the recycled resin composition.

In addition, particular materials of the additive are not specifically limited as long as the materials are used in typical thermoplastic resin compositions, and for example, the dripping preventing agent may be one or more selected from the group consisting of Teflon, polyamide, polysilicone, polytetrafluoroethylene (PTFE), and a tetrafluoroethylenehexafluoropropylene (TFE-HFP) copolymer considering further improvement of flame retardancy, and the inorganic filler may be one or more selected from the group consisting of barium sulfate, a barium glass filler, and barium oxide.

### Molded article

The present invention provides a molded article including the recycled resin composition described above. For example, the molded article may be applicable to various industrial fields such as various electrical and electronic products and automobile parts. As a molding method, general molding methods such as extrusion, injection, and casting may be applied.

### Example

Hereinafter, examples of the present invention will be described in detail in such a manner that it may easily be performed by a person skilled in the art to which the present invention pertains. The present invention may, however, be embodied in many different forms, and is not limited to Examples set forth herein.

### Examples and Comparative Examples

Resins and copolymers used in Examples and Comparative Examples are as follows.
* (A) Graft resin: ABS resin emulsion polymerized with 60 wt% of butadiene, 10 wt% of acrylonitrile, and 30 wt% of styrene (LG Chemical, DP270E)
* (B-1) Alkyl-substituted aromatic vinyl-based copolymer: Copolymer polymerized with 67 wt% of alphamethylstyrene, 5 wt% of styrene, and 28 wt% of acrylonitrile (LG Chemical, 99UH, Mw is 95,000)
* (B-2) Aromatic vinyl-imide-based copolymer: Copolymer bulk polymerized with 52 wt% of N-phenylmaleimide, 2 wt% of maleic anhydride, and 46 wt% of styrene (DENKA, MS-NB)
* (C) Aromatic vinyl-vinyl cyanide-based resin: Copolymer polymerized with 31 wt% of acrylonitrile and 69 wt% of styrene (LG Chemical, 95RF)
* (D-1) Recycled graft resin A: ABS resin recycled from waste products and having an Izod impact strength of 17.5 kgf·cm/cm, a tensile strength of 47 MPa, and a heat deflection temperature of 84 °C
* (D-2) Recycled graft resin B: ABS resin recycled from waste products and having an Izod impact strength of 9.6 kgf·cm/cm, a tensile strength of 45 MPa, and a heat deflection temperature of 86 °C
* (D-3) Recycled graft resin A: ABS resin recycled from waste products and having an Izod impact strength of 9.6 kgf·cm/cm, a tensile strength of 39 MPa, and a heat deflection temperature of 82 °C
* (D-4) Recycled graft resin D: ABS resin recycled from waste products and having an Izod impact strength of 5 kgf·cm/cm, a tensile strength of 56 MPa, and a heat deflection temperature of 85 °C
* (D-5) Recycled graft resin E: ABS resin recycled from waste products and having an Izod impact strength of 19 kgf·cm/cm, a tensile strength of 42 MPa, and a heat deflection temperature of 80 °C
* (D-6) Recycled graft resin F: ABS resin recycled from waste products and having an Izod impact strength of 6 kgf·cm/cm, a tensile strength of 49 MPa, and a heat deflection temperature of 92 °C

Resin compositions of Examples and Comparative Examples were prepared by mixing the resins and copolymers described above in the ratios shown in Table 1 below. The amounts below are all parts by weight, and 1.0 parts by weight of lubricant (SUNKOO Chemical, Sunlube) and 0.3 parts by weight of stabilizer (BASF, Irganox-1076) were commonly added and mixed.

**[Table 1]**

| | (A) | (B-1) | (B-2) | (C) | (D-1) | (D-2) | (D-3) | (D-4) | (D-5) | (D-6) |
|---|---|---|---|---|---|---|---|---|---|---|
| Example 1 | 25 | 35 | - | 10 | 30 | - | - | - | - | - |
| Example 2 | 25 | 35 | - | 10 | - | 30 | - | - | - | - |
| Example 3 | 22 | 43 | 5 | - | 30 | - | - | - | - | - |
| Example 4 | 22 | - | 12 | 36 | 30 | - | - | - | - | - |
| Example 5 | 22 | - | 12 | 36 | - | 30 | - | - | - | - |
| Example 6 | 20 | 38 | 12 | - | 30 | - | - | - | - | - |
| Example 7 | 20 | 38 | 12 | - | - | 30 | - | - | - | - |
| Example 8 | 20 | - | 20 | 30 | - | 30 | - | - | - | - |
| Example 9 | 25 | 35 | - | 25 | 15 | - | - | - | - | - |
| Example 10 | 25 | 35 | - | - | - | 40 | - | - | - | - |
| Compara tive Example 1 | 25 | 35 | - | 40 | - | - | - | - | - | - |
| Compara tive Example 2 | 22 | 43 | 5 | 30 | - | - | - | - | - | - |
| Compara tive Example 3 | 22 | - | 12 | 66 | - | - | - | - | - | - |
| Compara tive Example 4 | 20 | 38 | 12 | 30 | - | - | - | - | - | - |
| Compara tive Example 5 | 20 | - | 20 | 60 | - | - | - | - | - | - |
| Compara tive Example 6 | 25 | 35 | - | 10 | - | - | 30 | - | - | - |
| Compara tive Example 7 | 25 | 35 | - | 10 | - | - | - | 30 | - | - |
| Compara tive Example 8 | 25 | 35 | - | 10 | - | - | - | - | 30 | - |
| Compara tive Example 9 | 25 | 35 | - | 10 | - | - | - | - | - | 30 |

### Experimental Example 1

The resin compositions prepared in Examples 1 to 10 and Comparative Examples 1 to 7 were put into a twin-screw extruder, and kneaded and extruded at 240 °C to prepare pellets, and for samples injected from the pellets at 240 °C, heat deflection temperature, Izod impact strength, tensile strength, and paintability were measured using the following methods, and the results are shown in Table 2 below.
(1) Heat deflection temperature (HDT, °C): Measured according to ASTM D648 under a load of 18.6 kgf/cm², at a heating rate of 120 °C/hr, and in unannealed conditions.
(2) Izod impact strength (kgf·cm/cm): According to ASTM D256, using a 6.4 mm thick sample, the notched Izod impact strength was measured by notching the sample at room temperature (23 °C).
(3) Tensile strength (MPa): Measured in the condition of a cross head speed of 50 mm/min according to ASTM D638.
(4) Paintability: Upon injection, a sample was prepared to be 10 mm x 10 mm x 3.2 mm and degreased using isopropyl alcohol (IPA) and then applied with the silver metallic paint, dried at room temperature (25 °C) for 5 minutes, and then applied with a clear coating solution and dried at 85 °C for 30 minutes. Thereafter, the dried sample was observed with the naked eye and evaluated based on the following criteria.
   - ∘ (Excellent): No defects such as erosion are observed on the painted surface.
   - Δ (Good): Fine paint erosion is observed on the painted surface.
   - X (Poor): Erosion is clearly observed on the painted surface.

**[Table 2]**

| | Heat deflection temperature | Impact strength | Tensile strength | Paintability |
|---|---|---|---|---|
| Example 1 | 93 | 21 | 43 | ○ |
| Example 2 | 92 | 20 | 44 | ○ |
| Example 3 | 98 | 17 | 44 | △ |
| Example 4 | 98 | 16 | 43 | ○ |
| Example 5 | 97 | 15 | 43 | ○ |
| Example 6 | 103 | 15 | 43 | △ |
| Example 7 | 102 | 14 | 43 | △ |
| Example 8 | 102 | 13 | 43 | ○ |
| Example 9 | 94 | 20 | 44 | ○ |
| Example 10 | 91 | 21 | 42 | △ |
| Comparative Example 1 | 94 | 27 | 48 | ○ |
| Comparative Example 2 | 99 | 19 | 49 | ○ |
| Comparative Example 3 | 99 | 18 | 48 | ○ |
| Comparative Example 4 | 104 | 15 | 51 | △ |
| Comparative Example 5 | 104 | 14 | 50 | △ |
| Comparative Example 6 | 91 | 17 | 39 | X |
| Comparative Example 7 | 95 | 13 | 47 | X |
| Comparative Example 8 | 89 | 22 | 41 | X |
| Comparative Example 9 | 95 | 13 | 44 | X |

Referring to Table 2, it is determined that, considering that 30% of the resin (C) was not added compared to Comparative Examples 1 to 5 all composed of virgin resins, in Examples 1 to 10 in which recycled graft resins were applied, the impact strength and tensile strength were not substantially degraded, heat resistance was also not affected, and paintability was greater in the use of recycled graft resin, despite the reduced input amount of virgin aromatic vinyl-vinyl cyanide-based resin (C), which may compensate for impact strength and tensile strength, due to the use of recycled resin.

Comparative Example 6 using a recycled graft resin having a tensile strength of less than 41 MPa, Comparative Example 7 using a recycled graft resin having a tensile strength of greater than 54 MPa, Comparative Example 8 using a recycled graft resin having a heat deflection temperature of less than 82 °C, and Comparative Example 9 using a recycled graft resin having a heat deflection temperature of greater than 90 °C are shown to have less paintability than Examples 1 to 10.

## Claims

1. A recycled resin composition comprising:
a base resin including a graft resin and a heat-resistant resin; and
a recycled graft resin,
wherein the heat-resistant resin is at least one copolymer selected from the group consisting of an alkyl-substituted aromatic vinyl-based copolymer and an aromatic vinyl-imide-based copolymer, and
the recycled graft resin has a heat deflection temperature of 82 °C to 90 °C and a tensile strength of 41 MPa to 54 MPa.

2. The recycled resin composition of claim 1, wherein the recycled graft resin has a heat deflection temperature of 83 °C to 88 °C and a tensile strength of 43 MPa to 50 MPa.

3. The recycled resin composition of claim 1, wherein the recycled graft resin has an Izod impact strength of 8 kgf·cm/cm to 25 kgf·cm/cm.

4. The recycled resin composition of claim 1, comprising the base resin in an amount of 50 to 90 parts by weight; and the recycled graft resin in an amount of 10 to 50 parts by weight, with respect to 100 parts by weight of the recycled resin composition.

5. The recycled resin composition of claim 1, wherein the graft resin and the recycled graft resin each independently comprise a conjugated diene-based polymer, an aromatic vinyl-based monomer unit, and a vinyl cyanide-based monomer unit.

6. The recycled resin composition of claim 1, wherein the alkyl-substituted aromatic vinyl-based copolymer comprises an alkyl-substituted aromatic vinyl-based monomer unit, an aromatic vinyl-based monomer unit, and a vinyl cyanide-based monomer unit, and
the aromatic vinyl-imide-based copolymer comprises an aromatic vinyl-based monomer unit, an imide-based monomer unit, and an unsaturated acid anhydride-based monomer unit.

7. The recycled resin composition of claim 1, wherein the base resin further comprises an aromatic vinyl-vinyl cyanide-based resin, and
the aromatic vinyl-vinyl cyanide-based resin comprises an aromatic vinyl-based monomer unit and a vinyl cyanide-based monomer unit.

8. The recycled resin composition of claim 1, comprising the base resin in an amount of 60 to 85 parts by weight; and the recycled graft resin in an amount of 15 to 40 parts by weight, with respect to 100 parts by weight of the recycled resin composition.

9. A molded article comprising the resin composition of claim 1.

10. The molded article of claim 9, wherein the molded article is injection molded.
